# EUROPEAN PATENT APPLICATION

(11) **EP 2 653 257 A1**
(43) Date of publication of application: **23.10.2013**
(21) Application number: 11849197.6
(22) Date of filing: 09.12.2011
(51) Int. Cl.: B23K 20/00, B23K 20/24, B23K 28/02, F02F 1/24, B23K 11/11, B23K 11/12, B23K 20/10

(54) **BONDING METHOD AND MEMBERS TO BE BONDED**

(30) Priority: 15.12.2010 JP 2010279806; 15.12.2010 JP 2010279808
(71) Applicant: Nissan Motor Co., Ltd, Yokohama-shi, Kanagawa 220-8623 (JP)
(72) Inventor: MIZUNO, Hideaki, Atsugi-shi, Kanagawa 243-0123 (JP); FUKAMI, Toru, Atsugi-shi, Kanagawa 243-0123 (JP); USHIJIMA, Kenshi, Atsugi-shi, Kanagawa 243-0123 (JP)
(74) Representative: Hoefer & Partner
(86) International application number: PCT/JP2011/078581
(87) International publication number: WO 2012/081521

(57) **Abstract**

Provided is a bonding method for bonding a pair of members to be bonded (10, 20) made of conductive material and having bonding surfaces which are not positioned on the same plane, the bonding method including a bonding step in which the bonding surfaces (10a, 20a) of the members to be bonded are positioned to face each other, an electric current is supplied from one of the members to be bonded to the other for carrying out resistance heating while the pair of members to be bonded are slid relative to each other, whereby the bonding surfaces are bonded to each other. Split or partition surfaces (120) to form a hollow passages (110, 111) and extending along the axis of the hollow passage is set as the bonding surfaces which are not on the same plane.

## Description

### TECHNICAL FIELD

The present invention relates to a bonding or joining method using frictional heat and vibration resistance, and members to be bonded to which the method thereof is applied.

### BACKGROUND ART

Conventionally, as a method of bonding electrically conductive metal materials or members to each other, resistance welding is used. By sandwiching conductive metal materials or members between electrodes in a state in which the contact between the members is established, and by providing current from the electrodes, the resistance heating caused by the contact resistance of the joint surface allows the conductive metal materials to be bonded together. For example, in Patent Document 1, such a method to achieve fusion bonding by resistance heating is described In which a pair of conductive metal materials to be bonded are vibrated while being in contact to each other, and, after peeling off the insulation film formed on the surface, the vibration will be stopped.

### SUMMARY OF THE INVENTION

### PROBLEM TO BE SOLVED BY THE INVENTION

However, since the electric current which causes the heating resistor is concentrated on a high surface-pressure area, and not flown evenly across the entirety of the joint or bonding surface, the heating is uneven and only a limited area or shape may be joined. For example, if the bonding surfaces of bonded members are not positioned on the same plane, a problem arises that it is difficult to join all the joint surfaces uniformly to obtain a stable bonding strength. In particular, in the case of a split surface to form a hollow passage extending along the axis of the hollow passage, the split surface is often not positioned on the same plane. Therefore, it has been earnestly desired for establishment of technique that enables the uniform bonding when the spilt surface such as this is set as a bonding surface.

The present invention has been made in order to solve the problems described above, and even when a split surface to form a hollow passage that is not on the same plane extending along the axis of the hollow passage is set as a bonding surface, the object to provide a bonding method for obtaining a stable bonding strength and the members to be provided are achieved.

### MECHANISM FOR SOLVING THE PROBLEM

According to the invention, the object is solved by the features of the main claim. The sub-claims contain further preferred developments of the invention.

The bonding method according to the present invention to achieve the above object pertains to a bonding method to bond together a pair of members to be bonded which are made from conductive material and have bonding surfaces not positioned on the same plane. The present bonding method has processes in which the bonding surfaces of members to be bonded are placed to face each other and bonding the bonding surfaces by carrying out a resistance heating by providing electric current from one of the member to the other member while a pair of the members are relatively slid. Further, as a bonding surface that is not on the same plane, a split or partition surface is set that is provided to form a hollow passage and extends along the axis of the hollow passage.

The members to be bonded according to the present invention that achieves the above object are bonded members to which the above-described bonding method is applicable. A bonding surface is provided and, as the bonding surface not on the same plane, such a split or partition face is set that is provided to form a hollow passage extending along the axis line of the hollow passage.

### EFFECT OF THE INVENTION

According to the bonding method that is configured as described above, due to bonding by carrying out resistance heating while sliding the members to be bonded, since sliding affects the high surface-pressure portion subject to be resistance heating to cause wear and plastic flow, the surface-pressure of the high surface-pressure portion will be reduced and the point of current concentration changes every moment. Thus, uniform heating of bonding surface is possible with the uniform bonding across the entirety of bonding surface so that a stable bonding strength may be achieved even at a plurality of bonding surfaces which are not located on the same plane. Therefore, even when a split or partition surface for forming a hollow passage and which extends along the axis of the hollow passage, is set as a bonding surface, a stable bonding strength may be available.

In addition, the members to be joined that is configured as described above are member suitably applied to the bonding method described above and a stable bonding strength may be available even when a split or partition surface to form a hollow passage and extending along the axis of the hollow passage as a bonding surface that is not positioned in the same plane.

Other objects, features and characteristics according to the present invention will become more apparent from the preferable embodiments described below and illustrated in the attached drawings.

### BRIEF DESCRIPTION OF THE DRAWINGS

Fig. 1 is a schematic diagram for explaining a bonding device to be applied to the bonding method in the first embodiment.
Fig. 2 is a schematic diagram illustrating a cylinder head joined by applying the bonding method in the first embodiment.
Fig. 3 is a cross-sectional view taken along line 3-3 of Fig.2..
Fig. 4 is a flow chart for explaining a bonding method in to the first embodiment.
Fig. 5 is a schematic diagram for explaining a bonding device in a second embodiment.
Fig. 6 is a flow chart for explaining a bonding method in the second embodiment [FIG 6].
Fig. 7 is a schematic diagram for explaining a first modification in the second embodiment.
Fig. 8 is a schematic diagram for explaining a second modification in the second embodiment.
Fig. 9 is a schematic diagram for explaining a third modification in the second embodiment.
Fig. 10 is a schematic diagram for explaining a fourth modification in the second embodiment.
Fig. 11 is a schematic diagram for explaining a bonding device in a a third embodiment.
Fig. 12 is a schematic diagram for explaining a first modification in the third embodiment.
Fig. 13 is a schematic diagram for explaining a second modification in third embodiment.

### IMPLEMENTATION FOR CARRYING OUT THE INVENTION

An embodiment according to the present invention is now made below with reference to the accompanying drawings. Note that in the description of the drawings, the same reference sign is assigned to the same element and redundant explanation of the same element will be omitted. Dimensional ratios of the drawings have been exaggerated for convenience of description, and may be different from the actual ratio.

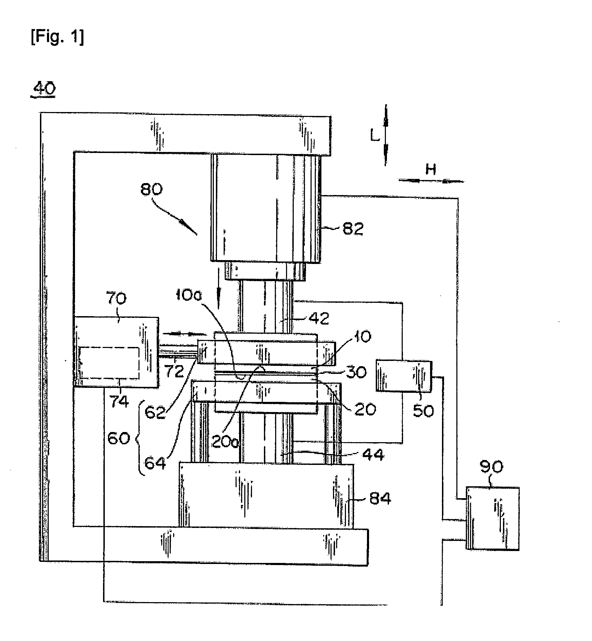

Figure 1 is a schematic diagram for explaining a bonding device to be applied to the bonding method in the first embodiment.

Bonding device 40 according to the first embodiment is a bonding device for bonding a pair of members 10 and 20 with conductivity. For an overview, the bonding device 40 has a bonding mechanism in which the bonding surfaces 10a, 20a of the pair of members to be bonded are placed in a opposing relationship, resistance heating is subsequently performed by flowing current from one of the members 10, 20 to the other via a first and second electrodes 42, 44 while sliding the pair of members relative to each other to establish bonding between bonding surfaces 10a, 20a. The bonding mechanism making use of resistance heating and frictional heating (plastic flow) is provided with a pressuring unit 80 to press the members to be bonded 10, 20 against each other, a sliding unit 70 to slide the members 10, 20 relative to each other, a current supply unit 50 for passing a current from one of the members 10, 20 to the other through electrodes 42, 44, and a control unit 90. The control unit 90 controls respective operations of pressing unit 80, sliding unit 70, and current supply unit 50.

The workpiece to be bonded is comprised of an upwardly positioned member 10, a downwardly positioned member 20, and an intermediary member 20 interposed between the members to be bonded 10, 20. The bonding regions, i.e. bonding interfaces among the members 10, 20 and the intervening member 30 have a shape which allows vibrations or oscillations in one direction, as described below, and the direction of extension of the bonding interfaces or mating surfaces 10a, 20a is in the horizontal direction H, thus allowing easy bonding of the members 10, 20 by the vibrations.

In the first embodiment, the members to be bonded 10,20 are high pressure die casting (HPDC) and an aluminum die cast material (ADC12) is applied.

It should be noted, in particular, that the members to be bonded 10, 20 are not limited to the high pressure die casting (HPDC), it is also possible to apply the rolled material for example,. However, because bonding is formed below the melting point and the effect of encapsulated gas is suppressed according to the first embodiment, so that the degree of freedom of choice of casting material is large (wide selection of materials). Further, since high pressure aluminum die casting is an inexpensive structural material , it is possible to reduce the manufacturing cost of the bonded assembly.

The members to be bonded 10, 20 are not limited to ones made of same materials (same metal). For example, the one of the members to be bonded 10, 20 may be composed of aluminum and the other of the members to be bonded 10, 20 may consist of an iron-based material or a magnesium-based material. In this case, since the dissimilar conjugate Al-Fe and Al-Mg are obtained, these may be widely applied to automobile parts is easy.

The mediate or intervening member 30 is composed of eutectic reaction material causing eutectic reaction with the members to be bonded 10, 20. When the member to be bonded 10, 20 are of aluminum, the eutectic reaction material forming low temperature eutectic with aluminum are zinc (Zn), Silicon (S9), Copper (Cu), tin (Sn), Silber (Ag), Nickel (Ni) and the like, for example

Since eutectic reaction material forms a liquid phase and promotes a mutual diffusion between the members 10, 20, on the one hand, and the eutectic reaction material and members to be bonded 10, 20, on the other, it is possible to secure a good bonding strength. Further, since the gap will be filled by the liquid phase formation, a good sealing property against water may be easily acquired even at bonding or mating of larger area or curved surface. Therefore, the eutectic materials are especially effective for parts requiring a high degree of water tightness or parts of two-dimensional curved surface or with large area, the thickness of the eutectic reaction material may be in the range between 10 to 100 µm, but the thickness is not limited to this range, but the thickness may be varied suitably depending on the parts involved.

By a eutectic reaction of the intervening member 30, the role of layered solution at low melting point and inhibition of re-oxidation by blocking oxygen, bonding in air with shorter time and lower heating input compared to vacuum brazing requiring vacuum atmosphere and a long time is possible. It is more preferable in terms of easiness with which mass production is facilitated.

Intervening or Interposing member 30 is also possible to be composed of a conductive material forming liquid phase other than eutectic reaction material. Freedom of selection of the mediatory or interposing member (wide selection of materials) will be extensive in this case. Further, since a liquid phase is formed by intervening member 30, and mutual diffusion will be facilitated between members 10, 20, and between intervening member 30 and members 10, 20, a good bonding strength may be secured. Moreover, since the gaps are filled by the formed liquid phase, it is easy to achieve a good water tightness of the bonding surfaces of wide area or curves surface. As the conductive material forming a liquid phase with non-eutectic reaction, common inexpensive braze, low temperature solder, and the like which are common and inexpensive compared to the eutectic reaction material may be enumerated.

Intervening member 30 is not limited to a separate configuration and may be formed by a coating layer integrated with one of the members to be bonded 10, 20. In such an instance, interposing material 30 may be placed locally. The coating can be formed by plating, cladding, spraying. In addition, the intervening member 30 is optional and may not always be provided.

The first and second electrode 42 and 44 serves as heating mechanism to raise temperature of the members to be bonded 10, 20, and intervening member 30 (bonding surfaces 10a, 20a of the members 10, 20 with the intervening member 30 interposed) by resistance heating and to soften. The first electrode 42 is electrically connected to the member 10 located in the upper position while the second electrode 44 is electrically connected to the member 20 located below. Bothe the first and second electrodes 42, 44 are not limited to the arrangement of direct contact to the members to be bonded 10, 20. Fore example, indirect contact via a separate member with conductivity is also possible. The first and second electrodes 42, 44 may be constructed by a plurality of electrodes respectively.

Current supply unit 50 is an electric current supply mechanism in which DC current or AC current is supplied from the first electrode to the second electrode through the intervening member 30 and the member 20 and the current value or voltage value are configured to be adjustable, for example.

Holding unit 60 has a movable holding unit 62 located in the upper position and a stationary holding unit 64 located below. The movable holding unit 62 is used to hold the member 10 for a reciprocating movement in the horizontal direction H. The stationary holding unit 64 restricts the movement of the member 20 along the horizontal direction H, and is thus used to hold the member 20 in a relatively stationary state with respect to member 10.

Sliding unit 70 is composed of vibration excitation unit to slide the member 10 relative to the member 20, and to cause frictional heat (plastic flow) to generate at bonding surfaces 10a, 20a of the members 10, 20 with the intervening member 30 interposed. The vibration excitation is provided with a shaft 72 to oscillate (vibration excite) the member 10 held by the movable holding unit 62 in the horizontal direction H, that extends parallel to the direction of extension of bonding surfaces 10a, 20a, and a motor as a drive source of the shaft 72. The vibration excitation mechanism may arbitrarily control the excitation frequency, excitation amplitude and excitation force. For example, the excitation amplitude ranges may be adjustable between 100 to 1000 µm. The excitation frequency range is adjustable between 10 to 100 Hz. The vibration excitation mechanism is not particularly limited, but may be of ultrasonic vibration, electromagnetic vibration, or oil-pressure-excitation type.

Because the direction of the vibration excitation corresponds to a reciprocating motion in one direction along the extending direction of the bonding surfaces 10a, 20a, the freedom degree of the shape of bonding surface 10a, 20a is improved. Stated otherwise, since vibration excitation is possible when movable in one direction, the shape of bonding surfaces 10a, 20a is not needed to be planar or flat surface. Fore example, such a configuration is possible in which a groove extending in one direction is mated with a projection.

In addition, the sliding unit 70 is not limited to such a configuration making use of vibration (vibration exciting or oscillating mechanism), but it is also possible to apply a rotational motion or an orbital motor to draw a circular orbit without self rotation suitably. Note that in the orbital motion, different from the vibrations, since the relative movement between bonding surfaces 10a, 20a is not stopped, only the dynamic friction coefficient is applied so that with a stable friction coefficient of the bonding surfaces 10a, 20a may be worn evenly.

Pressing unit 80 is provided with a pressing portion 82 located above and a supporting structure body 84 located below. Pressing portion 82 is connected to first electrode 42 and is configured to be reciprocating vertically (in a pressing direction perpendicular to bonding surfaces 10a, 20a) L. The pressing portion 82 is capable to impart pressing force P1 to member to be bonded 10 via the first electrode 42. and presents a surface-pressure adjustment mechanism to adjust the pressing surface-pressure of the member 10 against the member 20. A hydraulic cylinder is incorporated in the pressing portion 82, for example to be configured to adjust pressing force freely. The pressing force is within the range of 2 to 10 MPa, for example. The supporting structure body is used to support the second electrode 44 to which pressing force is transmitted from pressing unit 80 via intervening member 30 and the member to be bonded 20.

The pressing force imparted by the pressing unit 82 may be directly applicable to the member 10 without through the first electrode 42. Also, the pressing portion 82 and the supporting structure body 84 may be disposed opposite or inverted. In this case, the pressing portion 82 located below now is configured to pressurize the second electrode 44, while the supporting structure body 84 located above supports the first electrode 42. Further, in place of supporting structure body 84, a second pressing portion may be provided to improve the degree of freedom in adjusting the surface-pressure.

The control unit 90 is a control mechanism consisting of a computer with an arithmetic unit, storage unit, input/output units, and is used for overall control of pressing unit 80, sliding unit 70, and current supply unit 50. The respective functions of control unit 90 may be exerted by the arithmetic unit that executes programs stored in the storage device.

For example, the program is intended to execute a process to bond members to be bonded 10, 20 with the intervening member 30 interposed, for example, by oscillating member by sliding unit 70 in a horizontal direction with the pressing force P1 of the pressing unit 80 adjusted. Thus, while bonding surfaces 10a, 20a of members 10, 20 are being slid with the intervening member 30 interposed, the current supplied from current supply unit 50 is configured to be supplied from first electrode 42 to second electrode 44 for resistance heating

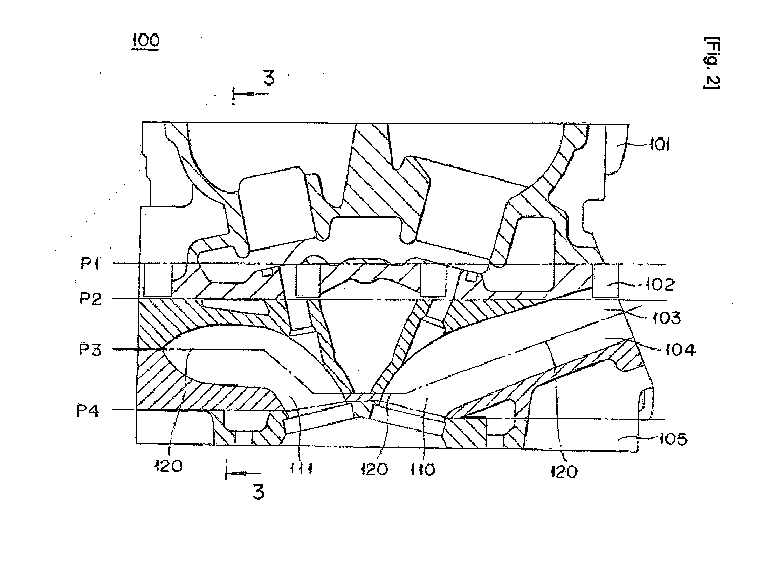

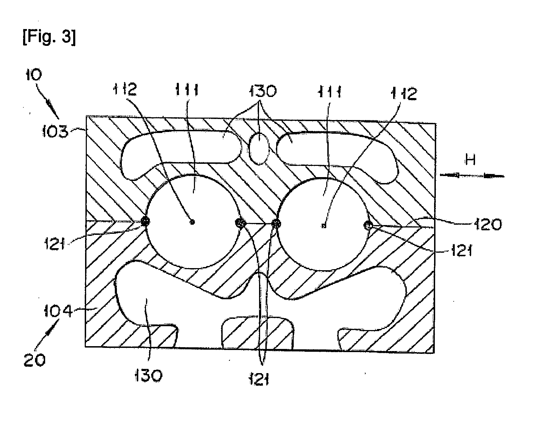

FIG. 2 is a schematic diagram illustrating a cylinder head 100 which is bonded or joined by applying the bonding or joining method according to the first embodiment. FIG 3 is a cross-sectional view taken along line 3-3 of Figure 2.

Referring to FIG 2, cylinder head 100 is split or partitioned into cam carrier 101, upper deck 102, water jacket -upper 103, water jacket-lower 104, and lower deck 105 in this order from the top and is constructed by bonding these together. Cam carrier 101 supports a cam shaft rotatably that causes intake valve and exhaust valve to open or close. Both water jacket-upper 103 and water jacket -lower 104 form a space of water jacket. The upper deck closes from top the water jacket space. Lower deck 105 forms a combustion chamber by contacting a upper surface of cylinder block (not shown).

The boding surface P1 indicated by the dashed line shows a bonding surface between cam carrier 101 and upper deck 102, while bonding surface P2 shows a bonding surface between upper deck 102 and water jacket-upper 103. Further, bonding surface P3 shows a bonding surface between water jacket-upper 103 and water jacket-lower 104, and finally bonding surface P4 shows a bonding surface between water jacket lower 104 and lower deck 105.

In particular, the bonding surface P3 formed between water jacket-upper 103 and water jacket-lower 104 constitutes a bonding surface not on the same plane. As this bonding surface not placed on the same plane, a partition surface for forming a hollow passage is formed and extends along the axis of the hollow passage. The hollow passage is provided with an intake port 110 and exhaust port 111. The water jacket-upper 103 corresponds to a member to be bonded 10 while water jacket-lower corresponds to the other member to be bonded 20. The direction of oscillation or vibration lies in a direction perpendicular to the paper surface in FIG. 2, and in the left-right, horizontal direction H in FIG. 3.

Referring to FIG. 3, the split or partition surface 120 is provided at the portion 121 (denoted by black circles in the figure) that represents a maximum size along the direction of extension of split surface 120 (left-right direction in the figure) as viewed in a cross-section perpendicular to the axis 112 of hollow passages 110, 111. In the illustrated example, the cross section of the hollow passage 11 is formed in circular, and the horizontal split surface 120 passes through the diameter portion of hollow passage 111. By structuring this way, vibrations may be transmitted uniformly to the members to be bonded 10, 20. Note that reference numeral 130 denotes a water jacket space.

The following describes the bonding or joining method according to the first embodiment.

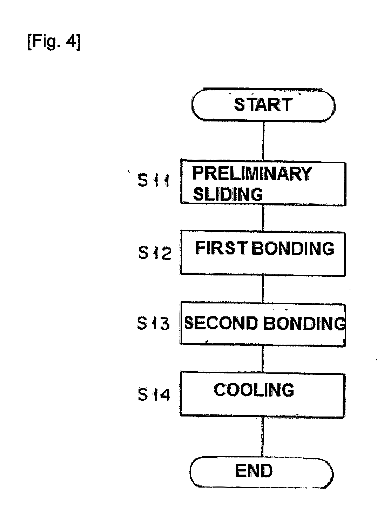

FIG. 4 is a flowchart for explaining a bonding method according to the first embodiment. The algorithm shown in the flow chart of Figure 4 is stored as a program in the storage unit of the controller 90 and is executed by the arithmetic unit of the control unit 90. The method in which the members to be bonded 10, 20 are bonded using a bonding device 40 is now described with reference to the flowchart shown in FIG. 4.

First, as shown in FIG. 1,an intervening member 30 is interposed between the members 10 and 20 to be joined, and the members to be bonded 10, 20 are retained between electrodes 42, 44. The member 20 is fixed to stationary supporting unit 64 while the member 10 is supported so as to be vibrated in the movable holding portion 62.

Subsequently, by the pressing unit 80, the members to be bonded 10, 20 are pressurized to each other with a preset pressure. The pressing force by the pressing unit 80 may be adjustable by control unit 90 and may be within a range between about 2 and 10 MPa. However, this is not limitative.

Next, by actuating the sliding unit 70 by control unit 90, the member to be bonded 10 is vibration excited and allowed to slide along the direction of bonding surfaces 10a, 20a. (Preliminary sliding process, S11). The vibration excitation frequency and vibration excitation amplitude are not limited, but for example, vibration amplitude of 100 to 100 µm and vibration excitation frequency of 10 to 100 Hz are preferable.

In response to the preliminary sliding process S11 to slide with pressing, the bonding surfaces 10a, 20a are in sliding relationship with friction heat being generated to soften the materials. Thus the bonding surfaces 10a, 20a are worn and subject to plastic flow to attain a uniform surface-pressure between the bonding surfaces 10a, 20a to some extent. In addition, the preliminary sliding process S11 removes the oxide film on the surface of aluminum to reduce the variation in contact resistance due to difference in film thickness and to attain the effect of suppression of heat generated during resistance heating in the following process. Therefore, such a treatment will be unnecessary in which, prior to bonding, the surfaces of aluminum members to be bonded 10, 20 will be degreased and the surface oxide film will be removed by brushing by a wire brush etc so that workability will be improved.

Following the preliminary sliding process S11, a first bonding process S12 is carried out. In the first bonding process S12, the first electrode 42 and second electrode 44 are brought into contact with members to be bonded 10, 20, and while maintaining sliding movement by sliding unit 70, first electrode 42 and second electrode 44 are supplied with current by current supply unit 50. Thus, by making use of both the friction heating and resistance heating, members 10, 20 are heated. in the first bonding process S12, resistance heating is applied greatly at the high surface-pressure portion heated by resistance heating and oxide file will be peered off compulsorily. In addition, by applying both the pressing force and sliding movement on the high surface-pressure portion heated by the resistance heating, both plastic flow and material diffusion take place, and further due to wearing of the high surface-pressure portion, the location of concentrated current varies every moment. Therefore, current flow will be dispersed and bonding surfaces 10a, 20a may be heated uniformly.

Subsequent to the first bonding process S12, a second bonding process S13 takes place. In the second bonding process S13, supply of current by current supply unit 50 is reduced, while the pressing force by pressing unit 80 will be increased to increase friction heat. Thus, the heat generation due to resistance heating is decreased, and control transitions to a process to promote an integration or unification by stirring the softened materials by sliding. Note that the increase in friction heating may be controlled by control of sliding unit 70.

Immediately before completion of the second bonding process S13, sliding unit 70 is stopped. However, in order to bond the members 10, 20 in a desirable relative position, the members 10, 20 are finally positioned in a desirable position by the sliding unit 70. Note that, when the pressing force of pressing unit 80 is large, the positioning accuracy will be deteriorated, so that, prior to stop of pressurization by the pressing unit 80, the pressing force by pressing unit 80 may be decreased. When the pressing force by pressing unit 80 is decreased, the positioning accuracy of bonding members 10, 20 will be improved and the sliding unit 70 may be stopped at the members 10, 20 being a desired relative position. Note that a separate configuration to position the members 10, 20 may be provided.

Following the second bonding process S13, a cooling process 14 takes place. In the cooling process S14, control unit 90 stops both the sliding unit 70 and current supply unit 50, and increases a pressing force by the pressing unit 80. Subsequently, at the time at which a predetermined time has elapsed, a determination of cooling process completion is made to end the pressing by the pressing unit 80.
Instead, in response to the temperature sensor (not shown) measuring the temperature of members 10, 20 indicating a signal to be input to control unit 90 below a preset value, cooling process is determined to be completed and the pressurization by the pressing unit 90 may be terminated. Thereafter, electrodes 42, 44 are retracted and the members 10, 20 which have been bonded will be removed from device and the bonding process of members to be bonded is thus completed.

The bonding interface between members to be bonded 10, 20 which have been bonded in accordance with a bonding method in the first embodiment, is formed with mixed regions comprised of a diffusion region in which the members 10, 20 are bonded due to diffusion of material of members 10, 20, a plastic bonding region in which the member materials are bonded due to plastic flow of materials, and an intermediary member junction bonding region bonded via intervening member 30 intervention.

The intervening member 30 is formed with liquid phase at low melting point due to eutectic reaction in both the first bonding process S12 and the second bonding process S13, and the mutual diffusion may be promoted between members to be bonded 10, 20, or from the intervening member 30 to members to be bonded 10, 20. Further, the intervening member 30 performs a function to suppress re-oxidation of bonding surfaces 10a, 20a by shutting off oxygen. Thus the bonding in the air within short time at low heat input may be available so that mass production will be made easier.

In the present bonding method, since bonding process is carried out by making use of sliding and resistance heating jointly, without applying a high pressing force to bonding surfaces 10a, 20a, the point off current concentration varies to achieve a uniform heating so that the bonding surfaces 10a , 20a with large area or complicated shape may be bonded with a low strain and uniform joint surface.
Moreover, since only the surface layer of bonding surface 10a, 20a are melt for bonding, the heating time may be reduced, and, in addition, even in the case of casting containing gas in the material, gas within the material is difficult to expand and spout due to heating so that a good bonding may be realized.

In addition, the member 10 to be bonded is excited to vibrate in a direction along the bonding surfaces 10a, 20a. However, as long as a relative sliding is ensures, the arrangement is not limited to this. For example, as a orbital motion and the like, vibration excitation in two directions along the bonding surfaces 10a, 20a , may be possible.

In addition, the preliminary sliding process S11 is not necessarily required but can be omitted. Further, in place or the preliminary sliding process S11, or prior to the preliminary sliding process S11, without allowing to slide by the sliding unit 70, by providing current to electrodes 42, 44 by current supply unit 50, the boding surfaces 10a, 20a may be softened due to resistance heating. In addition, between the first bonding process S12 and second bonding process S13, without causing current supply to reduce and pressing force to increase, both the first bonding process S12 and the second bonding process S13 may be carried out in one bonding process. Moreover, cooling process S14 is not necessarily performed but may be omitted.

According to the boding procedure as described above, a wear and plastic flow occur due to sliding at the high surface-pressure portion heated by resistance heating and location of current concentration varies every moment due to reduction in surface-pressure of the high surface-pressure portion since the members to be bonded 10, ,20 (water jacket-upper 103, water jacket-lower 104) are slid to each other under resistance heating, Thus, bonding surfaces 10a, 20a may be heated uniformly, and a stable bonding strength may be acquired even at a plurality of bonding surfaces 10a, 20a not located on the same plane. Therefore, even when , as the bonding surfaces 10a, 20a not on the same bonding plane, a split surface or partition surface 120 for forming hollow passage 110, 111 and extending along axis 112 of the hollow passages 110, 111, is set, a stable bonding surfaces of members 10, 20 (water jacket-upper 103, water jacket-lower 104) may be obtained.

By applying the bonding method of the first embodiment to the bonding plane P3 between the water jacket-upper 103 and the water jacket- lower 104, water jacket-upper 103 and water jacket-lower 104 can be molded by the mold, thus eliminating the need for conventional sand core which has been necessary to form a space in the water jacket. Due to elimination of sand core, optimization of the shape of the space of the water jacket as well as the ease of processing may be achieved. By applying the bonding method of the first embodiment to the other bonding surfaces, P1, P2, and P4, respective sand cores which have been in need at respective locations, are now unnecessary and the overall weight of cylinder head 100 or improvement in machining will be achieved.

As described above, the bonding method in the first embodiment relates to a bonding method of a pair of members to be bonded 10, 20 of conductive material with bonding surface not on the same plane. The bonding surfaces 10a, 20a of the members t10, 20 are placed to face each other, and while the pair of the members 10, 20 are relatively slid to each other, a bonding process of bonding surfaces are bonded by supplying current to flow from one of the members 10, 20 to the other. In addition, as the bonding surfaces 10a, 20a which are not on the same plane, a split surface or partition surface 120 to form hollowing passages 110, 111 and extending along axis of the hollow passages is provided. Due to this bonding method, since the members 10, 20 are bonded by resistance heating with the members are kept in sliding motion to each other, a wear and plastic flow occur due to sliding at the high surface-pressure portion heated by resistance heating and location of current concentration varies every moment due to reduction in surface-pressure of the high surface-pressure portion since the members to be bonded 10, ,20 (water jacket-upper 103, water jacket-lower 104) are slid to each other under resistance heating, Thus, bonding surfaces 10a, 20a may be heated uniformly, and a stable bonding strength may be acquired even at a plurality of bonding surfaces 10a, 20a not located on the same plane. Therefore, even when , as the bonding surfaces 10a, 20a not on the same bonding plane, a split surface or partition surface 120 for forming hollow passage 110, 111 and extending along axis 112 of the hollow passages 110, 111, is set, a stable bonding surfaces may be obtained.

The split or partition surface 120 is set at the portion 121 that presents the maximum size along the direction of extension of split surface 120 as seen in a cross-sectional view perpendicular to the axis 112 of hollow passages 110, 111. Thus, vibrations may be transmitted uniformly to the members to be bonded 10, 20.

When the vibrations are caused in one direction and the bonding regions, i.e., bonding surfaces are allowed the sliding along that one direction, members to be bonded will be bonded easily

The members to be bonded 10, 20 are the members preferably applicable to the bonding method described above. Even when , as the bonding surfaces 10a, 20a not on the same bonding plane, a split surface or partition surface 120 for forming hollow passage 110, 111 and extending along axis 112 of the hollow passages 110, 111, is set, a stable bonding strength may be obtained.

The members to be bonded 10, 20 are applied to the cylinder head 100, and if the hollow passage is formed as at least one of the intake port or exhaust port, a conventional sand core will be unnecessary, which has been in need, and overall weight of cylinder head is reduced and the workability or processing will be improved.

Next, a second embodiment will be described.

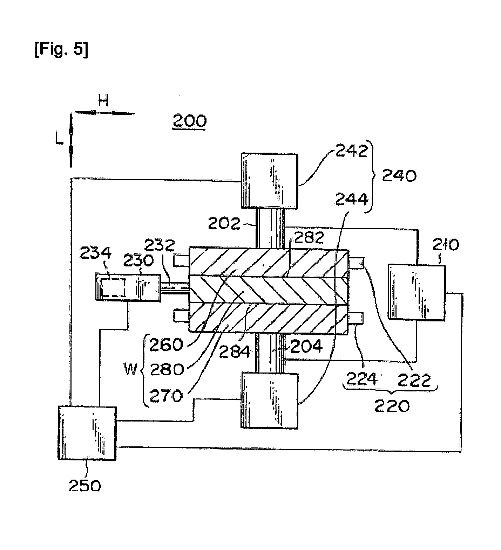

FIG. 5 is a schematic diagram for explaining a bonding device according to the second embodiment.

The bonding device in the second embodiment is used to bond three or more members of conductive material by using resistance heating and friction heating, and is provided with a first electrode 202, second electrode 204, current supply unit 210, retaining unit 220, sliding unit (sliding mechanism) 230, pressing unit 240 and control unit 250.

The work W is composed of a first member to be bonded 260 located above, a second member located below 270, and intermediate member 280 interposed between the first member260 and the second member 270, and the structure in which members to be bonded are connected in series may be configured easily. The intermediate member 280 has a first bonding surface 260 in contact with the first member 260 and a second bonding surface 284 in contact with the second member 270.

It should be noted that the area of the first and second bonding surfaces 282, 284 are set to substantially the same. In addition, the intermediate member 280 has a uniform shape with respect to the direction of vibration described later, and the extending direction of the first and second bonding surfaces 282, 284 lies in the horizontal direction H. Thus the first and second bonding surfaces of the intermediate member are able to be bonded with ease by vibrations.

The members to be bonded are made of aluminum (Al) in the second embodiment. Aluminum is used in the form of rolled material (e.g., A5052) or casting material (e.g. ADC12). The member to be bonded is not specifically limited, as long as conductive material is used, and iron (Fe) or magnesium (Mg) may be used. Further, the bonding of the same bonding material, Al-Al, or dissimilar bonding materials, such as Al-Fe, or Al-Mg are also applicable.

Incidentally, in order to bond the first and second members to be bonded 260, 270 to the intermediate member 280 at relatively low temperature, it is preferable that the intermediate member 280 is made from the conductive material lower in melting point than the materials constituting the first and second members to be bonded.

The first and second electrodes 202, 204 are heating mechanism to raise temperature of work W by resistance heating. The first electrode 202 is electrically connected to the first member 260 located in the upper position while the second electrode 204 is electrically connected to the second member 204 located below. The first and second electrodes 202, 204 may be constructed by a plurality of electrodes respectively.

Current supply unit 200 is a current supply mechanism by which current is supplied from the first electrode 202 to the second electrode 204 through the first member 260, the intermediate member 280, and the second member 270, and the current value or voltage value are configured to be adjustable, for example.

Holding unit 220 has first holding portion 222 and a second holding portion 270. The first holding portion 222 holds the first member 260, and is used to hold the first member 260 (and first electrode 202) stationary relative to the first bonding surface 282 of the intermediate member 280. The second holding portion 124 is positioned opposite of the first holding 222 with respect to the intermediate member 280, and holds the second member 270 , and thus is used to hold the second member 270 (and the second electrode 204) stationary with respect to the second bonding surface 284 of the intermediate member 280.

The sliding unit 230 is used to generate friction heat by sliding the first and second bonding surfaces 282, 284 of the intermediate member 280 relative to the first and second members 260, 270, and is comprised of a shaft 232 to vibrate (oscillate) the intermediate member 280 in a horizontal direction H parallel to the extension direction of the first and second bonding surfaces 282, 284 and a vibration exciting mechanism having a motor 234 representing a drive source of shaft 232. For example, the excitation amplitude ranges may be adjustable between 100 to 1000 µm. The excitation frequency range is adjustable between 10 to 100 Hz. The vibration excitation mechanism is not particularly limited, but may be of ultrasonic vibration, electromagnetic vibration, or oil-pressure-excitation type.

Because the direction of the vibration excitation corresponds to a reciprocating motion in one direction along the extending direction of the bonding surfaces 282, 284, the freedom degree of the shape of bonding surface 282, 284 is improved. Stated otherwise, since vibration excitation is possible when movable in one direction, the shape of bonding surfaces 282, 284 is not needed to be planar or flat surface. Fore example, such a configuration is possible in which a groove extending in one direction is mated with a projection.

In addition, the sliding unit 230 is not limited to such a configuration making use of vibration (vibration exciting or oscillating mechanism), but it is also possible to apply a rotational motion or an orbital motor to draw a circular orbit without self rotation suitably. Note that in the orbital motion, different from the vibrations, since the relative movement between bonding surfaces is not stopped, only the dynamic friction coefficient is applied so that with a stable friction coefficient may be worn evenly.

Pressing unit 240 is provided with a first pressing portion 242 located above and a second pressing portion 244. First pressing portion 242 is a surface-pressure adjusting mechanism that adjust the pressing surface-pressure of the first member 260 against the first bonding surface 282, and is connected to first electrode 202 and is configured to be reciprocating vertically (in a pressing direction perpendicular to first and second bonding surfaces 282, 284) L. The second pressing portion 244 is a surface-pressure adjusting mechanism to adjust the surface-pressure of the second member 270 against the second bonding surface 284, and is connected to second electrode 204 and is capable of reciprocating in the vertical direction L. T A hydraulic cylinder is incorporated in the first and second pressing portion 242, 244, respectively, and configured, for example to adjust pressing force freely. The pressing force is within the range of 2 to 10 MPa, for example.

The control unit 250 is a control mechanism consisting of a computer with an arithmetic unit, storage unit, input/output units, and is used for overall control of pressing unit 240, sliding unit 230, and current supply unit 210. The respective functions of control unit 250 may be exerted by the arithmetic unit that executes programs stored in the storage device.

For example, the program is intended to execute a process to bond the first bonding surface 282 and a second bonding surface 284, while adjusting the pressing surface-pressure of the first member 260 against the first bonding surface 282 and the pressing surface-pressure of the second member 270 against the second bonding surface 284, to vibrate the intermediate member 280 in the horizontal direction H by the sliding unit 230. Thus, while sliding the first and second bonding surfaces 282, 284 of the intermediate member 280 with respect to the first and second members 260, 270, resistance heating will be cause to generate by supplying current from current supply unit 210 from first electrode 202 to the second electrode 204 via first member 260, intermediate member 280, and second member 270.

In the bonding device 200, as described above, since the first and second electrodes 202, 204 for resistance heating are not in contact with the sliding first and second bonding surfaces 282, 284, and are connected to the first and second members 250, 270 relatively stationary electrically, the first and second electrodes 202, 204 softened by temperature increase by resistance heating due to sliding may be avoided to wear, and the softened portions are prevented to induce stick to the first and second electrode 202, 204. Therefore, the frequency of replacement of the first and second electrodes 202, 204 will be reduced. In other words, the present bonding device may improve the life of the electrode for resistance heating the member made of conductive material bonded.

The following describes the bonding and joining method according to the second embodiment.

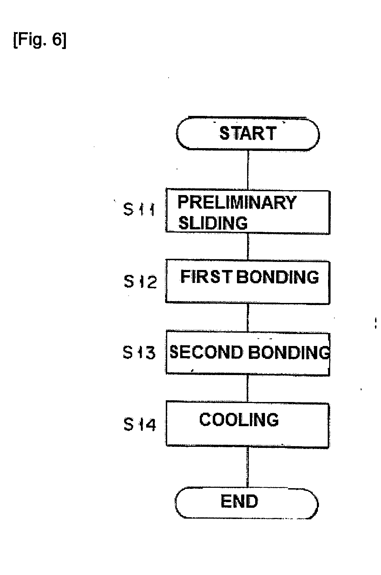

FIG 6 is a flowchart for explaining a bonding method according to the second embodiment. The algorithm shown in the flow chart of Fig. 6 is stored as programs in the storage unit of the control unit 250 for execution by the arithmetic unit of the controller 250.

The present bonding method is provided with bonding process to bond the first and second bonding surfaces 282, 284 to the first and second bonding members 260, 270 by supplying current from the first electrode 202 to flow to the second electrode 204 via the first member 260, intermediate member 280, and second member 270 while sliding the first and second bonding surfaces 282, 284 of the intermediate member 280 against the first and second members260, 270.

Generally, the bonding process is provided with a preliminary sliding process S21to reduce the variations in the contact resistance, a first bonding process S22 to start formation of a bonding interface between the first member 260 and intermediate member 280 and a bonding interface between the second member 270 and intermediate member 280, a second bonding process S23 to promote unification or integration of the bonding interface, and finally cooling process S24 to cool the members 260, 270 and intermediate member 280.

More specifically, in the preliminary sliding process S21, intermediate member 280 is arranged between the first member 260 and second member 270, and the first and second pressing portions 242, 244 of the pressing device 240 are driven subsequently, and pressing force is imparted to the first and second members 260, 270 via the first and second electrodes.

Then, the sliding unit 230 is driven, whereby the sliding (vibration) is caused in horizontal direction H. At this time, the first and second members 260, 270 in contact with intermediate member 280 are placed under pressure and the movement in the horizontal direction is restricted by the first holding portion 222 and second holding portion 124 of the holding unit 220, friction occurs on the first and second bonding surfaces 282, 284 of intermediate member 280 (and the corresponding bonding surfaces on the first and second members to be bonded), and an aluminum oxide on the surface of the bonding surface film is removed.

In the first bonding process S22, the current supply unit is driven, and current supplied from current supply unit 210 is caused to flow from first electrode 202 to second electrode 204 via the first member 260, intermediate member 280 and second member 270 to generate resistance heating. Thus, the first and second bonding surfaces 282, 284 cause to wear, plastic flow, and material diffusion by the combination of the friction heating and resistance heating.

In the second bonding process S23, current supply from current supply unit 210 is reduced whereby the amount of heat generated by resistance heating is lowered and the pressing force by the pressing unit 240 will be increased. Thus, the amount of heat due to resistance heating is reduced and process proceeds to a step where the integration will be promoted by stirring the softened material by sliding. The increase in the friction heat may be achieved by controlling the sliding unit 230.

The current supply by current supply unit 210 will be finally stopped. Subsequently, immediately before entering the cooling process S24, the sliding unit 230 is stopped to be driven, and the intermediate member 280 is positioned at a preset stationary position (final bonding position). In this instance, in order to enhance positioning accuracy and to make positioning easier, pressing force by pressing unit 240 may also be reduced.

As the results of the first bonding process S22 and the second bonding process S23, a diffusion bonding region where the conductive materials diffuse mutually and a plastic flow bonding region containing a pressure bonding and recrystallization structure on the bonding interface. Specifically, since the bonding interfaces are bonded physically by the plastic flow bonding region in addition to the diffusion bonding region, the strength similar to the parent material characteristics of the first and second members 260, 270 and intermediate member 280 so that a good bonding strength with water-tightness may be secured over the entirety of the bonding surface.

In the cooling process S24, the pressing force by pressing unit 240 will be increased, and after a predetermined time has elapsed, it is determined that cooling process is complete to stop pressing operation. Then, the first and second pressing portions of pressing unit 240 (first and second electrodes 202,, 204) are separated from first and second members 260, 270 respectively. Completion of cooling may be decided directly by detecting the temperature.

Thereafter, the workpiece W bonded with the intermediate member 280 interposed between the first member 260 and second member 270 is removed. In other words, it is possible to easily form a structure bonding members in series easily.

Since the aluminum oxide film on the surface of the joint surface is removed and variation in contact resistance due to the difference in film thickness is reduced in preliminary sliding process S21, the variation in the amount of heat generated in the following, first bonding process S22 will be suppressed. Further, since, prior to the preliminary sliding process S21, pre-treatments such as the removal of degreasing and removal of aluminum oxide film by brushing with a wire brush are unnecessary, workability is improved. It is also possible if necessary to carry out the pre-treatment, however.

In addition, prior to the preliminary sliding process S21 or as an alternative to the preliminary sliding process S21, by driving the current supply unit 210 with the sliding unit 230 stopped, such a pre-heating process may be conceivable where the first and second bonding surfaces 282, 284 will soften due to resistance heating. It is also possible to omit the preliminary sliding process S21 eventually.

Without reducing the current supply and by withholding to increase the pressure, it is also possible to integrate the second bonding process S2 3 into the first bonding process S23. In addition, cooling step S24 may be appropriately omitted.

In the present bonding process, as described above, since the first and second electrodes 202, 204 for resistance heating are not in contact with sliding first and second bonding surfaces 282, 284, and the first and second members 250, 270 relatively stationary are electrically connected, the first and second electrodes 202, 204 softened by temperature increase by resistance heating due to sliding may be avoided to wear, and the softened portions are prevented to induce stick to the first and second electrode 202, 204. Therefore, the frequency of replacement of the first and second electrodes 202, 204 will be reduced. In other words, the present bonding method may improve the life of the electrode for resistance heating the member made of conductive material bonded.

Further, since a combination of both resistance heating and friction heat are used, it is not necessary to impart a high surface-pressure compared to the bonding process of using the one only, bonding of the first and second bonding surfaces 282, 284 with large area may be easily joinable. Specifically, since the location of current concentration varies or changes to be heated uniformly without a high pressing force (surface-pressure) being applied against bonding surface, the bonding surface of large area or with complex shapes may be bonded together with a surface bonding with low strain.

Since only the surface layer of bonding surface is plastically flown (melt), heating time may be shortened), and, even in the case of casting containing gas in the material, gas within the material is unlikely to expand and spout due to heating so that a good bonding may be achieved.

Since the areas of the first and second bonding surfaces 282, 284 are set to substantially the same, current is avoided to concentrate on one of the first and second bonding surfaces 282, 284 to ensure uniform heating with ease. In addition even a high surface-pressure region is present on which current concentrates within the first and second bonding surfaces, in that region, resistance heating is greatly applied t heat and remove the oxide film forcibly. Further by causing plastic flow to occur due to pressing force (surface-pressure) and vibration, the position of current concentration changes every moment so that current flow will be dispersed with uniformly heating the first and second bonding surfaces 282, 284.

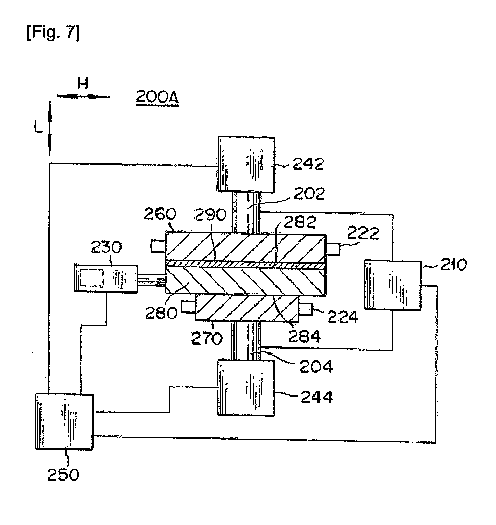

FIG. 7 is a schematic diagram for explaining a first modification of the second embodiment.

In the bonding device 200A in the first modification, the area of first bonding surface 282 is different from the second bonding surface 284. The area of the first bonding surface 282 is larger than that of the second bonding surface. In this case, since it is difficult to bond the first and second bonding surfaces 282, ,284 uniformly, so that an intervening member 290 is arranged between the first member 260 and the intermediate member 280.

The intervening member 290 is composed of conductive material with a melting point lower than the melting point of the conductive material of the first bonding member 260 and/or intermediate member 280.. Therefore, even when the area of the first bonding surface 282 is different from the second bonding surface 284, due to the placement of intervening member of low melting point on the bonding surface 282 with larger area, a uniform heating is possible.

The intervening member 290 is preferably made from a eutectic reaction material that is capable of forming a liquid phase (eutectic reacted) with the conductive materials constituting the first member 260 and/or intermediate member 280 since the first member 260 and intermediate member 280 may be bonded to the intermediate member at a lower temperature. In this instance, the bonding interface contains, in addition to the diffusion bonding region and plastic flow bonding region, an intermediate material intervention bonding region (region containing intervening member 290 and a diffusion bonding region in which the conductive material constituting the intervening member 290 diffuses in the conductive material constituting the first member 260 and intermediate member 280). Further, in the diffusion bonding region, the intervening member 290 expelled or diffused is present. Note that the thickness of the eutectic reaction layer has a range between 10 to 100 µm, this is not limitative, but the thickness may change depending on the portions involved.

Since eutectic reaction material forms a liquid phase and promotes a mutual diffusion between the members to be bonded, on the one hand, and between the eutectic reaction material and members to be bonded, on the other, it is possible to secure a good bonding strength. Further, since the gaps will be filled by the liquid phase formation, a good sealing property against water may be easily acquired even at bonding or mating of larger area or curved surface. Further, by a eutectic reaction, liquid phase is produced at low melting point and inhibition of re-oxidation by blocking oxygen is blocked, bonding in air with shorter time and lower heating input compared to vacuum brazing requiring vacuum atmosphere and a long time is possible. The eutectic reaction materials which cause an eutectic reaction with aluminum are zinc (Zn), copper (Cu), tin (Sn) and silver (Ag), for example.

When the area of second bonding surface 284 is greater than the area of the first bonding surface 282, it is preferable for the intervening member 290 to be disposed between the second member 270 and intermediate member 280 for uniform bonding. In addition, as the intervening member 290, a braze or solder to form a liquid phase is applicable. Further, the intervening member 290 is not limited to the separate configuration, but may be composed of a coating layer composed of the first member 260 or intermediate member integrally. In this case, intervening member 290 may be disposed locally. The coating can be formed by plating, cladding, coating or the like.

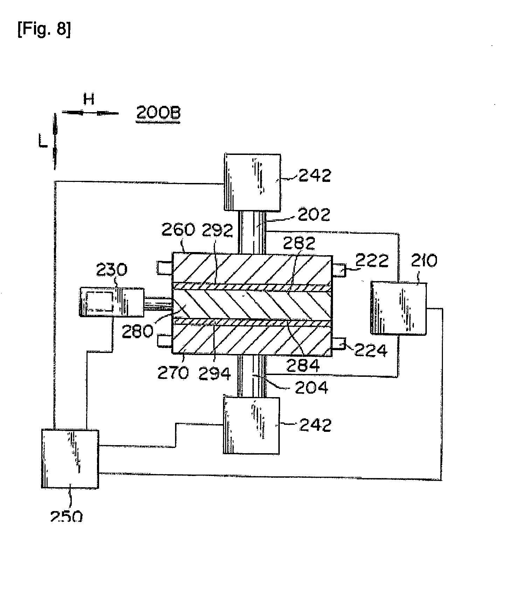

FIG. 8 is a schematic diagram for explaining a second modification in the second embodiment.

In the bonding device 200B according to the second modification, a first intervening member 292 disposed between the first member 260 and intermediate member 280 and a second intervening member 294 disposed between the second member 270 and intermediate member 280. The first intervening member 292 is composed of conductive material of a melting point temperature lower than that of conductive material constituting the first member 260 and/or intermediate member 280 while the second intervening member 294 is composed of the conductive material of a melting point temperature lower than the second member 270 and/or intermediate member 280.

Therefore, the first and second members 260 and 270 may be bonded to the intermediate member 280 at a lower temperature, and the degree of selection of conductive materials constituting the intermediate member 280 is large. The first and second intervening members 292, 294 are preferably made of eutectic reaction material for bonding at lower temperature.

The first and second intervening members 292, 294 are not limited to a configuration of separate body. They may be made of a coating layer integrally formed with intermediate member 280, or a coating layer integrally formed with both the first and second members to be bonded 260, 270.

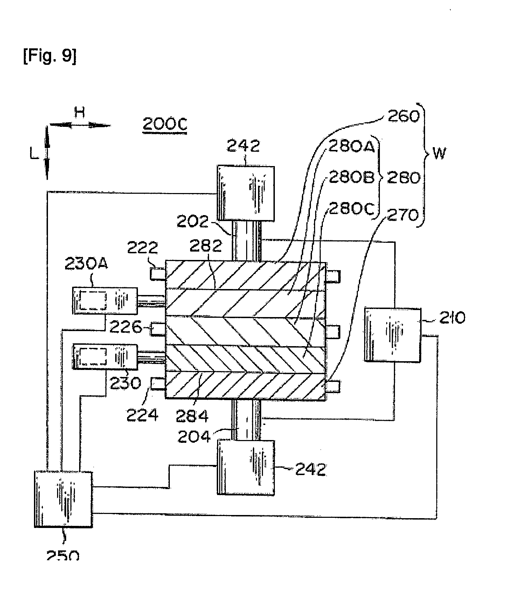

Fig. 9 is a schematic diagram for explaining a third modification of the second embodiment.

In the bonding device 200C pertaining to a third modification, the intermediate member 280 is composed of three intermediate members (members to be bonded) 280A to 280C made of conductive material, and a third holding part 226 and second sliding unit 230A are added. The intermediate member 280A (fist intermediate member) faces the first member 260 and is provided with a first bonding surface 282. The intermediate member 280C (second intermediate member) faces the second bonding surface 270 and is provided with a second bonding surface 284. The intermediate member (third intermediate member) 280B is disposed between intermediate member 280A and intermediate member 280C. The third holding unit 226 is a second holding mechanism that holds the intermediate member 280B in a state stationary relative to intermediate members 280A, 280C. The second sliding unit 230A is used to generate friction heat by oscillating the first bonding surface 282 of the intermediate member 280 relative to the first member 260. The sliding unit 230 is used to generate friction heat by oscillating the second bonding surface 284 relative to the second member 270.

In this case, while restricting the intermediate member 280B from moving in the horizontal direction by the third holding unit 226 (holding the intermediate member 280B stationary relative to intermediate members 280A,280C), by vibrating (oscillating) the intermediate member 280A located above and the intermediate member 280C located below by way of first and second sliding units 230, 230A respectively, the first and second members 260, 270 maybe bonded to intermediate members 280A and 280C, while the intermediate member 280C may be bonded to intermediate member 280C. In other words, in the third modification, the workpiece having members to be bonded composed of five parts may be bonded. Note that by adding holding units and sliding units further, the structure having more than three intermediate members is also applicable.

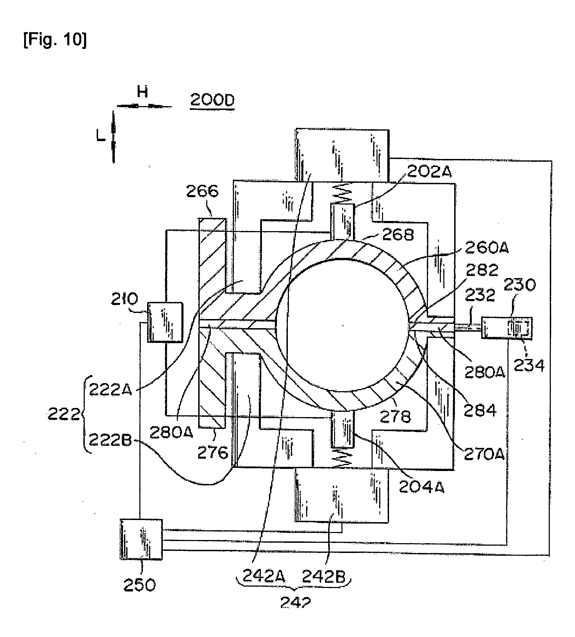

Fig.10 is a schematic diagram for explaining a fourth modification in the second embodiment.

The workpiece W is not limited to that of simple shape, but a large component having a complex shape to which high pressure die casting (HPDC) is applied is applicable.

For example, in the bonding device 200D according to the fourth modification, a first member 260A with a flange 266 and a hemispherical portion 268 and a second member 270A with flange 276 and a hemispherical portion 270A may be bonded to an intermediate member 280A.

In this case, in order to restrict the movement of the large molded parts, i.e. first and second members 260A, 270A in a horizontal direction, it is preferable that the first holding portion 222A and second holding portion 222B of the holding unit 222 are configured to fix the first and second members 260A, 270A at a plurality of locations.

In addition, it is preferable that the first and second pressing portions 242A, 242B of the pressing unit 242 contact the first and second members 260A, 270A to apply the pressing force directly, while the first and second electrodes 202A, 204A are resiliently supported by the first and second pressing portions 242A, 242B so as the large pressing force from the first and second pressing portions 242A, 242B may not be applied directly.

As described above, in the second embodiment, since the first and second electrodes for carrying out the resistance heating are not in contact with the sliding first and second bonding surfaces, and are connected to the first and second members relatively stationary electrically, the first and second electrodes softened by temperature increase by resistance heating due to sliding may be avoided to wear, and the softened portions are prevented to induce stick to the first and second electrode. Therefore, the frequency of replacement of the first and second electrodes will be reduced. In other words, the present bonding device may improve the life of the electrode for resistance heating the members made of conductive material bonded.

When the intermediate member is interposed between the first member and second member, the structure with members bonded in series may be easily acquired.

When the areas of the first and second bonding surfaces 282, 284 to be bonded are set to substantially the same, current is avoided to concentrate on one of the first and second bonding surfaces so that uniform heating is easily available.

When the area of the first bonding surface is larger than the area of the second bonding surface, by placing an intervening member of conductive material with a melting point temperature lower than the conductive material constituting the first member and/or intermediate member between the first member and intermediate member, and, when the area of the second bonding surface is larger than the area of the first bonding surface, by placing an intervening member of conductive material with a melting point temperature lower than that of conductive material constituting the second member and/or intermediate member between the second member and third member, the intervening member is disposed to the one with larger area, and thus a uniform heating may be available.

If the sliding is performed by vibrations and the first and second bonding surfaces of intermediate member has a uniform configuration or shape along the direction of vibrations, the first and second bonding surfaces may be bonded easily.

If the intermediate member is composed of a conductive material having a low melting point than that of conductive material constituting the first and second members to be bonded, the first member and/or the second member may be bonded to the intermediate member at low temperature.

When a first intervening member disposed between the first member and intermediate member and made of conductive material having a lower melting point temperature than the conductive material constituting the first bonding member and/or intermediate member, a second intervening member disposed between the second member and intermediate member 280 and made of conductive material having a lower melting point temperature than the conductive material constituting the second member and/or intermediate member are present respectively, the first and second member may be bonded to the intermediate member at a low temperature and the freedom of selection of the conductive materials constituting the intermediate member is large.

If the first and second intervening member is configured by a coating layer integral with the intermediate member, the first and second intervening members may be placed on the first and second bonding surfaces only and locally.

Next, a third embodiment will be described.

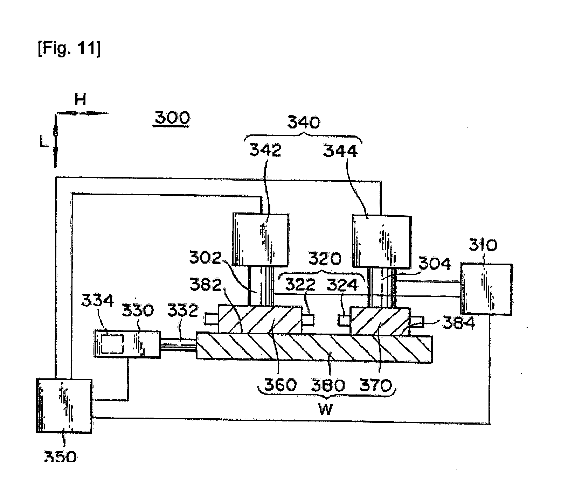

Fig. 11 is a schematic diagram for explaining a bonding device according to the third embodiment.

The third embodiment in which a bonded or joint structure is easily formed and a plurality of members to be bonded are disposed parallel to each other is different from the second embodiment a structure is obtainable with ease in which the members to be bonded are disposed in series

More specifically, the bonding device 300 pertaining to the third embodiment is used to band workpiece W and is provided with a first electrode 302, second electrode 304, current supply unit 310, holding unit 320, sliding unit (sliding mechanism) 330, pressing unit 340 and control unit 260.

The workpiece W is composed of a first and second members to be bonded 360, 370 located above, a third bonding member located below and intermediate member 380. The first member 360 and second member 370 are placed on a surface of a side of the intermediate member 380. Therefore, the intermediate member has the first bonding surface 382 in contact with the first member 360 and the second bonding surface 384 in contact with the second bonding surface 370 on the same plane.

The first electrode 302 and second electrode 304 are electrically connected to the first and second bonding members 360, 370. The current supply unit 310 is configured to supply current from first electrode 302 to flow to second electrode 304 via first member 360, intermediate member 380, and second member 370.

Holding unit 320 has a first holding portion 322 and a second holding portion 324 disposed in parallel to the first holding portion 322. The first holding portion 322 holds the first member 360 and is used to hold the first member 360 (and the first electrode 302) stationary relative to the first bonding surface 382 of intermediate member 380 by restricting the movement in the horizontal direction thereof. The second holding portion 324 is used to hold the second member (and second electrode 304) in a stationary state relative to the second bonding surface 384 of intermediate member 380. The first holding portion 322 and the second holding portion 324 may be configured to be integral eventually.

The sliding unit 330 is used to slide the first and second bonding surfaces 382, 384 of the intermediate member 380 relative to the first and second members 360, 370 and is provided with a shaft 332 to vibrate (oscillate) the intermediate member 380 in a horizontal direction H and a motor 334 serving as a drive source of the shaft 332.

The pressing unit 340 is provided with a first pressing unit 342 located above and a second pressing unit 344. The first pressing unit 342 is a surface-pressure adjusting mechanism to adjust pressing surface-pressure of the first member 360 against the first bonding surface 382, and is connected to the first electrode 302 and retractable in a vertical direction L. The second pressing unit 344 is a surface-pressure adjusting mechanism to adjust pressing surface-pressure of the second member 370 against the second bonding surface 364, and is connected to second electrode 304 and retractable in the vertical direction L.

Therefore, the controller 350, while adjusting by the pressing unit 340 a pressing surface-pressure of the first member 360 against the first bonding surface 382 and a pressing surface-pressure of the second member 370 against the second bonding surface, by vibrating the intermediate member 380 by the sliding unit 330 in a horizontal direction H, slides the first and second bonding surfaces 382, 384 of the intermediate member 380 relative to the first and second members 360, 370 and causes current supplied by current supply unit 310 from a first electrode 360 to the second electrode 304 via the first member 360, intermediate member 380 and second member 370 to bond the first and second bonding surfaces 382, 384 to one surface of the intermediate member 380.

In this case, since the first and second electrodes 302 and 304 for resistive heating are not in contact with the first and second bonding surfaces 382, 284, and are connected to the first and second members 360,370 which are relatively stationary, through sliding, electrodes 302, 304 softened due to temperature increase by resistance heating may be avoided from wearing, or the softened portions may be prevented from being caused to stick, or it is possible to reduce the frequency of replacement of the electrodes 302, 304.

In addition, in the third embodiment, the area of the first bonding surface 382 facing the first member 360 is greater than the area of the second bonding surface 384bon facing the second member 370. Therefore, it is possible to control the surface-pressure of the first member 360 to be smaller than the surface-pressure of the second pressing member 370. That is, even the area of the first bonding surface 382 and that of the second bonding surface 384 are different, by adjusting the surface-pressure in accordance with the difference, a uniform heating is possible. Conversely, when the area of the first bonding surface 382 facing the first member 360 is smaller than the area of the second bonding surface 384 facing the second member 370, from the same viewpoint, it is preferable to control the pressing surface-pressure of the first member 360 to be greater than the pressing surface-pressure of the second member 370.

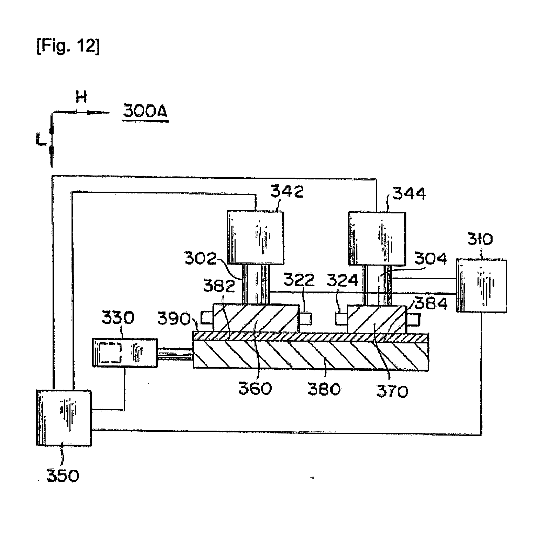

Fig. 12 is a schematic diagram for explaining a first modification in the third embodiment.

In the bonding device 300A pertaining to the first modification, an intervening member 390 is provided that is disposed on one surface opposing the first and second members 360, 370. The intervening member 390 is composed of, similar in the second modification pertaining to the second embodiment, conductive material of a lower melting point than the conductive material constituting the first and second members 360, 370. Therefore, it is possible to bond the first and second members 360,370 to the intermediate member 380 at low temperature and degree of selection of conductive materials constituting intermediate member 380 is large. The intervening member 390 is not limited to configuration of separate body, but may be configured by a coating layer integral with intermediate member 380, or by a coating layer integral with the first and second members 360, 370.

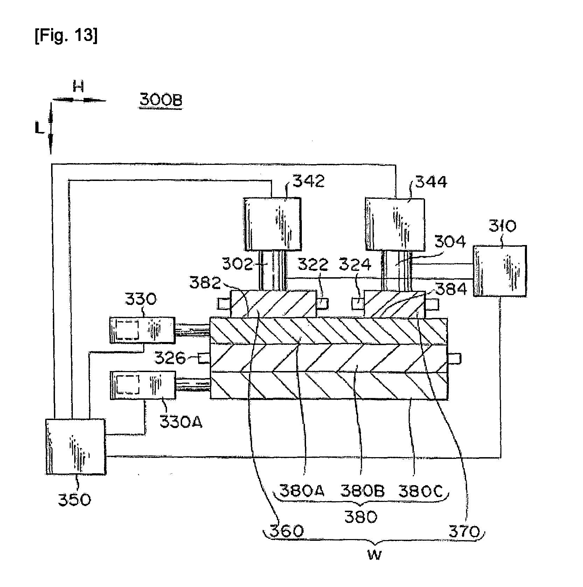

Fig. 13 is a schematic diagram for explaining a second modification in the third embodiment.

In the bonding device 300B pertaining to the second modification, the intermediate member 380 is comprised of three intermediate members (members to be bonded) 380A to 380C, and a third holding portion 326 and a second sliding unit 330A are added. The intermediate member 380A (second intermediate member) opposes the first and second members 360, 370 and has a first and second bonding surfaces 383, 384. The intermediate member 380B (second intermediate member) and intermediate member 380C are arranged to face the surface opposite to the first and second bonding surfaces 382, 384 of the intermediate member 380A, and the intermediate member 380C faces outside (positioned at the lowest). The third holding unit 326 is a second holding mechanism to hold the intermediate member 380B in a stationary state relative to the intermediate members 380A, 380C. The second sliding unit 330A is used to generate friction heat by sliding the intermediate member 380C relative to intermediate 380B. Note that sliding unit 330 also has a function to generate friction heat by sliding intermediate member 380A relative t intermediate member 380B.

In this case, in the same manner as the third modification in the second embodiment, while restricting the movement of the intermediate member 380B located in the middle horizontally, by vibrating (oscillating) the intermediate member 380B located below by the second sliding unit 330A in the horizontal direction H, it is possible to bond the first and second members 360, 370 to the intermediate member 380A located above, and bond the intermediate member 380B to both the intermediate member 380A and intermediate member 380C. In other words, in the third variation, it is possible to bond workpiece W comprised of five members. Note that, by omitting the intermediate member 380C and the second sliding unit 330A, it is possible to apply to the structure with two intermediate members, or by adding further a holding portion and sliding unit, it is also possible to apply to the structure with more than three intermediate members.

As described above, in the third embodiment, since the first member and the second member are disposed on one surface of the intermediate member, a structure in which a plurality of members to be bonded are disposed juxtaposed may be easily formed.

Further, when the area of the first bonding surface is greater than the area of the second bonding surface, the pressing surface-pressure against the first member is made smaller than the pressing surface-pressure of the second member against the second bonding surface. When the area of the first bonding surface is smaller than the area of the second bonding surface, the pressing surface-pressure of the first member against the first bonding surface is made greater than the pressing surface-pressure of the second member against the second bonding surface. In this case, since the surface-pressure is adjusted in accordance with the difference between the first and second bonding surfaces, a uniform heating is possible.

The present invention Is not limited to the embodiments described above, and various modifications may be possible within the scope of claims.

For example, the first and second electrodes are not limited to a form of direct contact with the first and second members to be joined. It is also possible to configure to be capable of moving the first and second electrodes, and first and second pressing portions back and forth independently from each other.

The present application is based on the Japanese Patent Application No.'s, 2010-27806, 2010-279898, and the contents of disclosure thereof may be referred to and incorporated herein by reference in their entirety.

### Description of reference signs

- 10,20: member (to be bonded)
- 10a, 20a: bonding surface
- 30: intervening member
- 40: bonding device
- 42: first electrode
- 44: second electrode
- 50: current supply unit
- 60: holding unit
- 70: sliding unit
- 80: pressing unit,
- 82: pressing portion
- 84: supporting structure body
- 90: control unit
- 100: cylinder head
- 101: cam carrier
- 102: upper deck
- 103: water jacket-upper
- 104: water jacket-lower
- 105: lower deck
- 110: intake port (hollow passage)
- 111: exhaust port (hollow passage)
- 112: axis line (axis)
- 120: split surface (partition surface)
- 130: water jacket space
- 200, 200A-200D: bonding device
- 202,202A: first electrode
- 204,204A: second electrode
- 210: current supply unit
- 220: holding unit
- 222, 222A: first holding unit (first retaining portion)
- 224, 224 B: second holding unit (second retaining portion)
- 226: third holding unit
- 230: sliding unit
- 230A: second sliding unit
- 232: shaft
- 234: motor
- 240: pressing unit
- 242, 242A: first pressing unit
- 244,244B: second pressing unit
- 250: control unit
- 260,260A: first member (to be bonded)
- 266: flange (portion)
- 268: hemispherical portion
- 270,270A: second member (to be bonded)
- 276: flange (portion)
- 278: hemispherical portion
- 280,280 A, 280B, 280C: intermediate member
- 282: first bonding surface
- 284: second bonding surface
- 290: intervening member
- 292: first intervening member
- 294: second intervening member
- 300,300A, 300B: bonding device
- 302: first electrode
- 304: second electrode
- 310: current supply unit
- 320: holding unit
- 322: first holding portion
- 324: second holding portion
- 326: third holding portion
- 330: sliding unit
- 330A: second sliding unit
- 332: shaft
- 334: motor
- 340: pressing unit
- 342: first pressing unit
- 344: second pressing unit
- 350: control unit
- 360: first member (to be bonded)
- 370: second member (to be bonded)
- 380,380 A, 380B, 380C: intermediate member
- 382: first bonding surface
- 384: second bonding surface
- 390: intervening member
- P1: bonding surface between cam carrier and upper deck,
- P2: bonding surface between upper deck and water jacket-upper
- P3: bonding surface between water jacket-upper and water jacket-lower
- P4: bonding surface between water jacket-lower and lower deck
- H: horizontal direction
- L: vertical direction
- W: workpiece

## Claims

1. A bonding method for a pair of members to be bonded made of a conductive material and having bonding surfaces which are not positioned on the same plane, comprising:
a bonding process to bond the bonding surfaces by supplying electric current from one of the members to the other for carrying out resistance heating while causing the bonding surfaces to face each other and to slide the pair of the members to be bonded relative to each other, wherein
a split surface is set as the bonding surfaces which are not on the same plane to form a hollow passage and to extend along the axis line of the hollow passage.

2. The bonding method claimed in claim 1, wherein
the split surface is provided at a portion that represents a maximum size along the direction of extension of the split surface as viewed in a cross-section perpendicular to the axis of the hollow passage.

3. The bonding method claimed in either in claim 1 or 2, wherein
the sliding is caused to occur in one direction, and
the bonding surfaces of the pair of the members to be bonded are shaped to allow the sliding along the one direction.

4. The members to be bonded which are applied in the bonding method described in claim 1, comprising:
bonding surfaces which are not on the same plane; wherein
a split surface is provided as the bonding surfaces which are not on the same plane to form the hollow passage and to extend along the axis of the hollow passage.

5. The members to be bonded as claimed in claim 4, wherein the hollow passage is at least one of an intake port or exhaust port applied to a cylinder head.
